# EUROPÄISCHE PATENTSCHRIFT

(11) **EP 3 408 006 B1**
(45) Veröffentlichungstag und Bekanntmachung des Hinweises auf die Patenterteilung: **10.03.2021**
(21) Anmeldenummer: 17704399.9
(22) Anmeldetag: 23.01.2017
(51) Int. Cl.: B01D 36/00, B01D 27/14, B01D 29/15, B01D 29/21, B01D 29/54, B01D 29/66

(54) **FILTERELEMENT MIT ZWEI FILTERMEDIEN**
FILTER ELEMENT WITH TWO FILTER MEDIA
ÉLÉMENT FILTRANT AVEC DEUX MÉDIUMS FILTRANTS

(30) Priorität: 29.01.2016 DE 102016201334
(43) Veröffentlichungstag der Anmeldung: 05.12.2018
(73) Patentinhaber: Robert Bosch GmbH, 70442 Stuttgart (DE)
(72) Erfinder: MARTINEZ GOMEZ, Miguel, 28300 Madrid (ES); CASTEJON LOPEZ, Miguel, 28033 Madrid (ES); TAFERL, Reinhard, 5303 Thalgau (AT); ARIAS ARIAS, Jose Luis, 28007 Madrid (ES); OTAHAL, Jan, 37901 Trebon (CZ); DIAZ MANZANERO, Sara, 28300 Madrid (ES); AYZA PARRA, David, CP. 12100 Castellon de la Plana (ES)
(86) Internationale Anmeldenummer: PCT/EP2017/051288
(87) Internationale Veröffentlichungsnummer: WO 2017/129511

(56) Entgegenhaltungen:
- WO-A1-2016/010973
- DE-A1- 1 948 958
- DE-A1- 4 214 694
- US-A1- 2012 223 001

## Beschreibung

### Stand der Technik

Die vorliegende Erfindung betrifft ein Filterelement. Außerdem betrifft die Erfindung ein Filtermodul, umfassend ein derartiges Filterelement. Dabei ist vorgesehen, dass mit dem Filterelement ein Fluid filterbar ist.

Filterelemente sind aus dem Stand der Technik bekannt. Diese werden eingesetzt, wenn ein System, das mit einem Arbeitsfluid zu versorgen ist, sensibel auf Verschmutzungen des Arbeitsfluids reagiert. Durch Filtermodule lassen sich derartige Verschmutzungen vermeiden. Insbesondere werden derartige Filterelemente in Kraftfahrzeugen eingesetzt, um Harnstoff oder Kraftstoff (z.B. Diesel oder Benzin), die jeweils als Betriebsmittel des Fahrzeugs verwendet werden, zu filtern.

Es kann je nach Gefrierpunkt des zu filternden Fluids vorkommen, dass bei tiefen Außentemperaturen das Fluid (z.B. Harnstofflösung) gefriert oder ausflockt (z.B. Diesel). Um dies zu verhindern können das Filtermodul und/oder das Filterelement beheizbar gestaltet sein, was den Energieverbrauch erhöht und den Aufbau des Filtermoduls bzw. des Filterelements kostenintensiv macht.

Aus der DE 10 2012 221 890 A1 ist ein derartiges Filtermodul bekannt.

Es sind auch Systeme bekannt, die im Stillstand oder in sonstigen Zuständen nicht mit dem Arbeitsfluid gefüllt sind. In diesem Fall muss eine Pumpe eine Pumprichtung ändern, um das Arbeitsfluid wieder aus dem System zu entfernen. Dies kann jedoch dazu führen, dass das Arbeitsfluid im Rückfluss durch das Filterelement strömt und somit ausgefilterte Partikel von dem Filterelement löst. Gelöste Partikel können anschließend die Pumpe erreichen und diese beschädigen.

Aus der DE 1 948 958 A1 ist ein Filter für strömende Flüssigkeiten bekannt, der zwei voneinander separate Filterelemente aufweist, die als Grobfilterelement bzw. als Feinfilterelement ausgebildet sind.

### Offenbarung der Erfindung

Das Filterelement gemäß der Erfindung erlaubt vorteilhafterweise einen Rückfluss von Fluiden, ohne dass bereits ausgefilterte Partikel zu einer Pumpe zurückgelangen können. Dazu weist das Filterelement gemäß der Erfindung ein erstes Filtermedium und ein, insbesondere von dem ersten Filtermedium unterscheidbares, zweites Filtermedium auf. Das Filterelement weist außerdem eine ungefilterte Seite und eine gefilterte Seite auf, wobei über die ungefilterte Seite ein Fluid in das Filterelement eingebbar ist und über die gefilterte Seite ein Fluid aus dem Filterelement ausgebbar ist. Es ist vorgesehen, dass sowohl das erste Filtermedium als auch das zweite Filtermedium unmittelbar zwischen der gefilterten Seite und der ungefilterten Seite des Filterelements angeordnet sind. Insbesondere ist vorgesehen, dass das erste Filtermedium und das zweite Filtermedium in ihrer Wirkweise parallel zueinander angeordnet sind.

Dies bedeutet insbesondere, dass sowohl das erste Filtermedium als auch das zweite Filtermedium sowohl gegenüber der ungefilterten Seite als auch der gefilterten Seite exponiert sind. Eine Hintereinanderschaltung der Wirkweisen des ersten Filtermediums und des zweiten Filtermediums ist nicht Gegenstand der Erfindung.

Die gefilterte Seite wird daher durch das erste Filtermedium und das zweite Filtermedium von der ungefilterten Seite getrennt. Somit ist sichergestellt, dass Partikel, die sich in einem Fluid auf der ungefilterten Seite befinden, bei Durchströmen des Filterelements durch das Fluid an dem ersten Filtermedium und/oder an dem zweiten Filtermedium ausgefiltert werden und somit nicht auf die gefilterte Seite gelangen können.

Erfindungsgemäß ist weiterhin vorgesehen, dass das erste Filtermedium in einer Fluidflussrichtung von der gefilterten Seite zu der ungefilterten Seite einen geringeren relativen Druckverlust aufweist als das zweite Filtermedium. Dies gilt insbesondere in einer stationären Phase, einige Zeit nach Beginn des Normalbetriebs mit Strömungsrichtung von der ungefilterten zur gefilterten Seite.

Unter einem relativen Druckverlust ist insbesondere zu verstehen, dass das erste Filtermedium bei normierter Abmessung und Flussgeschwindigkeit des Fluids einen geringeren Druckverlust des Fluids erzeugt als das zweite Filtermedium.

Der Druckverlust entspricht insbesondere der Differenz des Fluiddrucks auf der ungefilterten Seite und der gefilterten Seite.

Somit erfolgt ein höherer Fluiddurchfluss durch das erste Filtermedium als durch das zweite Filtermedium. Auf diese Weise ist verhinderbar, dass sich Partikel, die an dem zweiten Filtermedium anhaften, von dem zweiten Filtermedium lösen, wenn ein Fluid von der gefilterten Seite zu der ungefilterten Seite durch das Filterelement strömt. Auf diese Weise ist verhinderbar, dass eine Pumpe, die sich auf der ungefilterten Seite des Filterelements befindet, durch aus dem zweiten Filtermedium, z.B. schlagartig, gelöste Partikel beschädigt wird. Gleichzeitig ermöglicht das Filterelement einen Rückfluss durch Umkehren einer Pumprichtung, sodass ein mit Fluid versorgtes System von dem Fluid befreit werden kann.

Es ist außerdem vorgesehen, dass sowohl das erste Filtermedium als auch das zweite Filtermedium sowohl in einer Fluidflussrichtung von der gefilterten Seite zu der ungefilterten Seite als auch von der ungefilterten Seite zu der gefilterten Seite durchströmbar sind. Dabei ist, wie zuvor beschrieben, vorgesehen, dass sich die Filtereigenschaften des ersten Filtermediums und des zweiten Filtermediums voneinander unterscheiden, sodass das erste Filtermedium den geringeren relativen Druckverlust bei der Fluidflussrichtung von der gefilterten Seite zu der ungefilterten Seite aufweist.

Die Unteransprüche haben bevorzugte Weiterbildungen der Erfindung zum Inhalt.

Das erste Filtermedium ist ein Oberflächenfilter. Das zweite Filtermedium ist ein Tiefenfilter. Durch die Ausbildung des ersten Filtermediums als Oberflächenfilter kann insbesondere ein schnelles Verstopfen während eines Fluidflusses von der ungefilterten Seite zu der gefilterten Seite erfolgen. Das Verstopfen des Oberflächenfilters durch einen Filterkuchen bzw. der geringere Durchfluss bzw. der erhöhte Widerstand gegen einen Fluidstrom am ersten Filtermedium führt dazu, dass ein sehr großer oder sogar überwiegender Anteil des Fluids durch das zweite Filtermedium strömt. Am ersten Filtermedium bleiben daher auch nur wenige Partikel haften, so dass sich bei einer Umkehr des Fluidstroms auch nur relativ wenige Partikel (nämlich die des Filterkuchens) vom ersten Filterelement lösen können und auf die ungefilterte Seite zurückströmen.

Somit weist (zumindest innerhalb einer kurzen Zeitspanne) das zweite Filtermedium in einer Fluidflussrichtung von der ungefilterten Seite zu der gefilterten Seite einen geringeren relativen Druckverlust auf als das erste Filtermedium.

Durch die Ausbildung des zweiten Filtermediums als Tiefenfilter erfolgt die Abscheidung der Partikel insbesondere durch ein Anhaften von ausgefilterten Partikeln an oder in dem zweiten Filtermedium. Die Partikel werden im Filtermedium festgehalten, z.B. durch elektrostatische oder van-der-Waals-Kräfte. Die festgehaltenen Partikel sind im Vergleich zu den Partikeln auf der Oberseite des ersten Filtermediums schwer zu lösen. Daher sind bei einer Fluidflussrichtung von der gefilterten Seite zu der ungefilterten Seite die Partikel des Filterkuchens von dem ersten Filtermedium aufgrund dessen Ausbildung als Oberflächenfilter leichter zu lösen. Hierbei handelt es sich wegen des parallel geschalteten zweiten Filtermediums um nur sehr wenige Partikel im Filterkuchen, die die Poren verstopfen und den Fluidstrom zum zweiten Filtermedium lenken.

Somit ist vorgesehen, dass das erste Filtermedium hauptsächlich während des Fluidflusses von der gefilterten Seite zu der ungefilterten Seite durchströmt wird, da hier der Fluidwiderstand geringer ist, spätestens nach dem Lösen der Partikel des Filterkuchens. Denn der Fluidstrom durch das zweite Filtermedium reicht dann nicht mehr aus, die dort gehaltenen Partikel entgegen der Haltekräfte zu lösen und auf die ungefilterte Seite auszutragen.

Das zweite Filtermedium wird dagegen hauptsächlich während eines Fluidflusses von der ungefilterten Seite zu der gefilterten Seite durchströmt - in dieser Fluidflussrichtung verstopft das erste Filtermedium schnell und der Fluidstrom erfolgt im Wesentlichen durch das zweite Filtermedium.

Daher dient das zweite Filtermedium hauptsächlich zum Ausfiltern von Partikeln während eines normalen Betriebs, d.h. während Fluid von der ungefilterten Seite zu der gefilterten Seite strömt. Bei einem Rückfluss, d. h. bei einem Fluidfluss von der gefilterten Seite zu der ungefilterten Seite, werden diese Partikel nicht von dem zweiten Filtermedium gelöst, da das Fluid in diesem Fall hauptsächlich durch das erste Filtermedium strömt. Da an dem ersten Filtermedium aufgrund des höheren relativen Druckverlustes während eines Fluidflusses von der ungefilterten Seite zu der gefilterten Seite nur eine geringe Menge an Partikeln ausgefiltert wird und somit an dem ersten Filtermedium anhaftet, wird nur diese geringe Menge während des Rückflusses von dem Filterelement gelöst. Dies ist jedoch in der Auswirkung auf weitere Komponenten vernachlässigbar. Somit ist eine Gefahr, dass eine auf der ungefilterten Seite angeordnete Pumpe durch gelöste Partikel beschädigt wird, vermindert.

Mit anderen Worten kann das erste Filtermedium als eine Art autonomes Einrichtungs-Ventil betrachtet werden. Dabei ist das erste Filtermedium der "Ventilsitz" und die auf der ungefilterten Seite befindlichen Partikel, die sich auf dem ersten Filtermedium ablagern und es verstopfen sind die "Ventilkörper". Bei Umkehr des Fluidstroms werden die als Ventilkörper wirkenden Partikel von dem Ventilsitz (den Poren) des ersten Filtermediums weggespült und das "Ventil" öffnet.

Vorteilhafterweise ist außerdem vorgesehen, dass das erste Filtermedium und das zweite Filtermedium unterschiedliche Abmessungen aufweisen. Insbesondere weisen das erste Filtermedium und das zweite Filtermedium unterschiedliche Abmessungen in solchen Flächen auf, die der ungefilterten Seite des Filterelements zugewandt sind. Besonders vorteilhaft weist das zweite Filtermedium eine größere Abmessung auf als das erste Filtermedium, wodurch das zweite Filtermedium insbesondere eine größere Oberfläche als das erste Filtermedium aufweist, die gegenüber der ungefilterten Seite des Filterelements exponiert ist. Eine größere Oberfläche des zweiten Filtermediums wird insbesondere dadurch erreicht, dass das erste Filtermedium eine plane Fläche aufweist, während das zweite Filtermedium eine zickzack-Faltung aufweist. Dadurch wird auch die Anzahl der Partikel begrenzt, die notwendig sind, das erste Filtermedium zu verstopfen und bei Fluidrichtungsumkehr wieder in die ungefilterte Seite ausgetragen werden können.

Auf diese Weise ist insbesondere sichergestellt, dass in einem normalen Betrieb des Filterelements, d. h. während eines Fluidflusses von der ungefilterten Seite zu der gefilterten Seite, ein Fluidfluss größtenteils durch das zweite Filtermedium erfolgt. Daher ist vorgesehen, dass Partikel hauptsächlich an dem zweiten Filtermedium ausgefiltert werden und daher an diesem anhaften. An dem ersten Filtermedium haftet bevorzugt nur eine geringere Anzahl an Partikeln an, sodass bei einem Rückflussbetrieb, d. h. bei einem Fluidfluss von der gefilterten Seite zu der ungefilterten Seite, der größtenteils durch das erste Filtermedium erfolgt, die Anzahl von aus dem zweiten Filtermedium gelösten Partikeln verringert ist. Somit ist eine Gefahr eine Beschädigung einer auf der ungefilterten Seite angeordneten Pumpe durch gelöste Partikel vermindert.

Das zweite Filtermedium ist bevorzugt hohlzylinderförmig ausgestaltet. Somit weist das zweite Filtermedium bevorzugt eine Mittelachse, eine Mantelfläche und zwei Stirnflächen auf. Dabei ist insbesondere vorgesehen, dass die Mantelfläche gegenüber der ungefilterten Seite des Filterelements exponiert ist. Über die Stirnflächen ist gefiltertes Fluid, das sich nach Durchströmen des hohlzylinderförmigen zweiten Filtermediums innerhalb des von dem zweiten Filtermedium umschlossenen Raumes befindet, ausgebbar. Somit ist das zweite Filtermedium sehr stabil ausgelegt und weist gleichzeitig eine große Oberfläche relativ zu dem umschlossenen Volumen auf, die gegenüber der ungefilterten Seite exponiert ist.

Grundsätzlich kann die gefilterte Seite auch außerhalb der Mantelfläche liegen und die ungefilterte Seite innerhalb der Mantelfläche. Dann ist das ungefilterte Fluid in den vom zweiten Filterraum umschlossenen Raum eingebbar.

Es ist außerdem bevorzugt vorgesehen, dass das zweite Filtermedium an zumindest einer Stirnfläche ein Deckelelement aufweist, wobei das erste Filtermedium an dem Deckelelement angeordnet ist. Dabei kann das erste Filtermedium an einer Wand des Deckelelements angeordnet sein oder in einer Wand. Bevorzugt ist das erste Filtermedium unlösbar an dem Deckelelement befestigt. Das zweite Filtermedium kann vorteilhafterweise zwei solcher Deckelelemente aufweisen oder alternativ lediglich ein solches Deckelelement. In letzterem Fall ist bevorzugt vorgesehen, dass die verbleibende Stirnseite des zweiten Filtermediums ein Abdeckelement aufweist, das die Stirnseite abdeckt und insbesondere gegenüber dem zweiten Filtermedium abdichtet. Durch das Deckelelement sind das erste Filtermedium und das zweite Filtermedium getrennt voneinander angeordnet. Insbesondere ist vorgesehen, dass sowohl das erste Filtermedium als auch das zweite Filtermedium gegenüber dem Deckelelement abgedichtet sind, sodass keinerlei Undichtigkeiten innerhalb des Filterelements vorhanden sind.

Besonders bevorzugt ist vorgesehen, dass das Deckelelement hohlzylinderförmig ist und an einer Stirnseite einen Auslass aufweist. Über den Auslass ist Fluid von der gefilterten Seite des Filterelements ausgebbar. Insbesondere entspricht die gefilterte Seite des Filterelements demjenigen Volumen, das sowohl von dem zweiten Filtermedium als auch dem Deckelelement umschlossen ist. Über den Auslass ist somit gefiltertes Fluid aus dem Filterelement ausgebbar.

Es ist auch denkbar, dass das ungefilterte Fluid über einen Einlass an einer Stirnseite des Deckelelements eingebbar ist. Das zweite Filtermedium kann dann von innen nach außen durchströmt werden im Normalbetrieb.

Besonders vorteilhaft weist das Deckelelement an einer Mantelseite eine Öffnung auf, über die die gefilterte Seite mit der ungefilterten Seite verbunden ist, wobei das erste Filtermedium die zumindest eine Öffnung abdeckt. Somit ist einerseits vorteilhafterweise vorgesehen, dass eine Anordnung des ersten Filtermediums nahe an dem Auslass erfolgt. Somit hat das Fluid im Falle einer Strömungsrichtung von dem Auslass zurück zu der ungefilterten Seite des Filterelements nur einen kurzen Weg zurückzulegen. Insbesondere fließt das Fluid lediglich durch das Deckelelement und nicht durch das zweite Filtermedium. Durch die zumindest eine Öffnung auf der Mantelseite ist andererseits das erste Filtermedium, analog zu dem zweiten Filtermedium, mit einer Oberfläche hinsichtlich der ungefilterten Seite des Filterelements exponiert. Somit ist Fluid durch das erste Filtermedium leitbar, um zwischen der gefilterten Seite und der ungefilterten Seite und umgekehrt zu strömen.

Wie zuvor beschrieben, ist dabei bevorzugt vorgesehen, dass das Fluid in einem Normalbetrieb des Filterelements von der ungefilterten Seite zu der gefilterten Seite strömt, wobei dies größtenteils durch das zweite Filtermedium und nur zu einem untergeordneten Teil durch das erste Filtermedium und die zumindest eine Öffnung erfolgt. In einem Rückflussbetrieb hingegen strömt Fluid von der gefilterten Seite zu der ungefilterten Seite, wobei dies größtenteils durch die zumindest eine Öffnung und das erste Filtermedium und nur zu einem untergeordneten Teil durch das zweite Filtermedium erfolgt.

Das erste Filtermedium und/oder das zweite Filtermedium sind bevorzugt stoffschlüssig und/oder formschlüssig und/oder reibschlüssig mit dem Deckelelement verbunden. Besonders vorteilhaft sind das erste Filtermedium und das zweite Filtermedium mit dem Deckelelement verklebt. Auf diese Weise ist sichergestellt, dass das erste Filtermedium und das zweite Filtermedium dicht mit dem Deckelelement verbunden sind, sodass Undichtigkeiten zwischen erstem Filtermedium und Deckelelement sowie zweitem Filtermedium und Deckelelement vermieden sind.

Das erste Filtermedium und das zweite Filtermedium sind besonders vorteilhaft aus unterschiedlichen Materialien gefertigt. Somit weisen das erste Filtermedium und das zweite Filtermedium unterschiedliche Filtercharakteristika auf. In einer Alternative ist vorgesehen, dass das erste Filtermedium und das zweite Filtermedium aus demselben Material gefertigt sind, wobei das erste Filtermedium und das zweite Filtermedium sich in einer Form unterscheiden, wodurch wiederum unterschiedliche Filtercharakteristika vorhanden sind. Insbesondere können sich das erste Filtermedium und das zweite Filtermedium in ihrer jeweiligen Stärke bzw. Dicke unterscheiden. Durch die Unterschiede der Filtercharakteristika ergibt sich vorteilhafterweise der oben genannte unterschiedliche relative Druckverlust während des Fluidstroms durch die Filtermedien.

Das Filterelement weist bevorzugt ein Ventil zum wahlweisen Vermeiden eines Fluidstroms durch das erste Filtermedium auf. Das Ventil kann an unterschiedlichen Stellen platziert werden und ist insbesondere in einem Normalbetrieb des Filterelements, d. h. während eines Fluidstroms von der ungefilterten Seite zu der gefilterten Seite geschlossen. Somit führt das Schließen des Ventils dazu, dass kein Fluidstrom durch das erste Filtermedium, und somit insbesondere auch kein Fluidstrom durch die zumindest eine Öffnung des Deckelelements, erfolgt. Somit ist verhinderbar, dass auch das erste Filtermedium zusätzlich zu dem zweiten Filtermedium Partikel aus dem Fluid ausfiltert. Bei einem Rückflussbetrieb, d. h. bei einem Fluidstrom von der gefilterten Seite zu der ungefilterten Seite ist durch das Ventil verhinderbar, dass sich Partikel von dem ersten Filtermedium lösen (denn es lagern sich gar keine oder nur wenige Partikel daran an).

Dabei ist dieses Ventil ein von dem ersten und zweiten Filtermedium separates Element. Dabei kann z.B. das erste Filtermedium in einem abgetrennten Raum auf der gefilterten oder ungefilterten Seite angeordnet sein, wobei das Ventil den Fluidzugang zu diesem Raum ermöglicht (offenes Ventil) oder verhindert (geschlossenes Ventil). Das Ventil kann z.B. als mechanisches Rückschlagventil ausgebildet sein, das allein durch die Fluidströmung öffnet (bei Rückstrom) oder schließt (bei Normalbetrieb). Das Ventil kann jedoch auch ein elektrisch bzw. elektronisch gesteuertes bzw. aktuiertes Ventil sein. Ein derartiges Ventil kann z.B. mit dem Betrieb der Pumpe zum Abpumpen von Fluid aus dem Filter im Rückstrombetrieb gekoppelt sein und bei Anspringen der Pumpe öffnen oder es kann mit einem Steuergerät verbunden sein, das das Ventil in Abhängigkeit von einem Rückflussbetrieb öffnet bzw. bei Normalbetrieb schließt.

Schließlich betrifft die Erfindung ein Filtermodul umfassend ein Gehäuse. Dabei ist vorgesehen, dass in dem Gehäuse ein Filterelement nach einem der vorhergehenden Ansprüche angeordnet ist. Das Gehäuse weist bevorzugt einen Einlass sowie einen Auslass für Fluide auf. Ein solches Filtermodul erlaubt vorteilhafterweise einen Rückfluss von Fluid entgegen der normalen Betriebsrichtung, wobei ein Auslösen von Partikeln, die mittels des Filterelements ausgefiltert wurden, vermindert oder verhindert ist. Somit ist die Gefahr einer Beschädigung von Komponenten, die im normalen Betrieb stromaufwärts des Filterelements liegen, im Rückflussbetrieb verringert. Insbesondere ist das Filtermodul Teil eines Harnstoffeinspritzsystems eines Kraftfahrzeugs.

Bevorzugt ist das erste Filtermedium aus einer Membran aus Kunststoff gebildet. Der Kunststoff umfasst insbesondere Polypropylen (PP), Polybutylenterephthalat (PBT), oder Polyetheretherketon (PEEK). Das zweite Filterelement ist bevorzugt aus Zellulose gefertigt und kann insbesondere heißgezogene Fasern enthalten. Die heißgezogenen Fasern sind vorteilhafterweise nach dem meltblown-Verfahren hergestellt.

### Kurze Beschreibung der Zeichnung(en)

Nachfolgend werden Ausführungsbeispiele der Erfindung unter Bezugnahme auf die begleitende Zeichnung im Detail beschrieben. In der Zeichnung ist:
- Figur 1: eine schematische Abbildung eines Filterelements gemäß einem Ausführungsbeispiel der Erfindung,
- Figur 2: eine schematische Schnittansicht des Filterelements gemäß dem Ausführungsbeispiel der Erfindung,
- Figur 3: eine schematische Ansicht des Filterelements gemäß dem Ausführungsbeispiel der Erfindung in einem Normalbetrieb,
- Figur 4: eine schematische Ansicht des Filterelements gemäß dem Ausführungsbeispiel der Erfindung in einem Rückflussbetrieb, und
- Figur 5: eine schematische Ansicht eines Filtermoduls gemäß einem Ausführungsbeispiel der Erfindung.

### Ausführungsform(en) der Erfindung

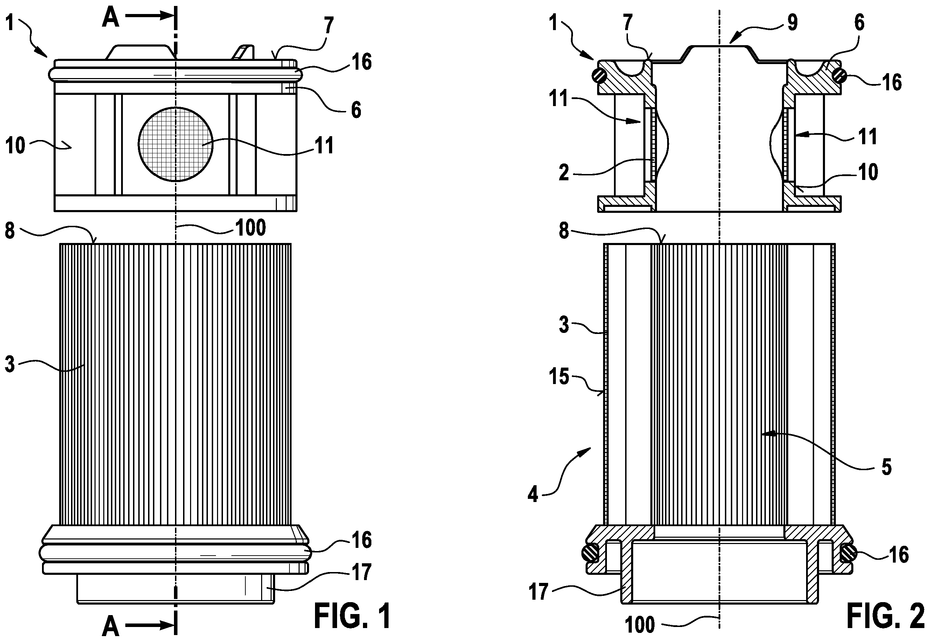

Figur 1 zeigt schematisch ein Filterelement 1 gemäß einem Ausführungsbeispiel der Erfindung in einer Explosionsdarstellung. Figur 2 ist eine Schnittansicht von Figur 1 entlang der Schnittlinie A-A.

Das Filterelement 1 umfasst ein erstes Filtermedium 2 und ein zweites Filtermedium 3. Das erste Filtermedium 2 ist von dem zweiten Filtermedium 3 unterscheidbar, insbesondere weisen das erste Filtermedium 2 und das zweite Filtermedium 3 unterschiedliche Filtercharakteristika auf. Insbesondere ist das erste Filtermedium 2 ein Oberflächenfilter, während das zweite Filtermedium 3 ein Tiefenfilter ist. Das Filterelement 1 weist außerdem ein Deckelelement 6 auf. Das Deckelelement 6 ist an dem zweiten Filtermedium 3 angeordnet und dient zur Aufnahme des ersten Filtermediums 2. Deckelelement 6 und zweites Filtermedium 3 sind dabei fluiddicht miteinander verbunden.

Das zweite Filtermedium 3 ist hohlzylinderförmig ausgebildet. Dabei ist vorgesehen, dass das zweite Filtermedium 3 eine Mittelachse 100 sowie eine Stirnfläche 8 aufweist. An der Stirnfläche 8 ist das Deckelelement 6 angeordnet. Das Deckelelement 6 ist bevorzugt ebenfalls hohlzylinderförmig ausgestaltet und weist an einer Mantelseite 10 zwei Öffnungen 11 auf. Die Öffnungen 11 sind von dem ersten Filtermedium 2 bedeckt.

Das Filterelement 1 weist eine ungefilterte Seite 4 sowie eine gefilterte Seite 5 auf. Die gefilterte Seite 5 entspricht einem Volumen, das von dem zweiten Filtermedium 3 sowie von dem Deckelelement 6, die beide hohlzylinderförmig ausgestaltet sind, umschlossen ist. Über einen Auslass 9, der sich auf einer Stirnseite 7 des Deckelelements 6 befindet, ist Fluid von der gefilterten Seite 5 ausgebbar. Somit ist über den Auslass 9 gefiltertes Fluid aus dem Filterelement 1 ausgebbar. Die ungefilterte Seite 4 entspricht einem Volumen radial außerhalb einer Mantelfläche 15 des zweiten Filtermediums 3 sowie der Mantelseite 10 des Deckelelements 6. Da die Mantelseite 10 des Deckelelements 6 zwei Öffnungen 11 aufweist, die von dem ersten Filtermedium 2 abgedeckt sind, kann Fluid von der ungefilterten Seite 4 zu der gefilterten Seite 5 sowohl durch das erste Filtermedium 2 als auch durch das zweite Filtermedium 3 strömen.

Grundsätzlich ist es auch möglich, dass die ungefilterte Seite 4 innerhalb der Mantelseite 10 und die gefilterte Seite 5 außerhalb der Mantelseite 10 liegt.

Das erste Filtermedium 2 und das zweite Filtermedium 3 sind somit in ihrer Wirkrichtung parallel zueinander angeordnet. Sowohl das erste Filtermedium 2 als auch das zweite Filtermedium 3 trennen die ungefilterte Seite 4 von der gefilterten Seite 5. Somit wird eine Fluid gefiltert, wenn es von der ungefilterten Seite 4 durch das Filterelement 1 zu der gefilterten Seite 5 strömt. Beide Filtermedien 2, 3 sind können somit unmittelbar zwischen der gefilterten und der ungefilterten Seite angeordnet sein.

Das erste Filtermedium 2 und das zweite Filtermedium 3 sind bevorzugt mit dem Deckelelement 6 stoffschlüssig verbunden, insbesondere verklebt. Auf diese Weise ist ein dichtes Anbringen des ersten Filtermediums 2 und des zweiten Filtermediums 3 an dem Deckelelement 6 gewährleistet, sodass das Filterelement 1 keine Undichtigkeiten aufweist. Das erste Filtermedium 2 kann z.B. auf die Ränder der Öffnungen 11 geklebt sein oder mittels eines Schweißprozesses (Reibschweißen, Laserschweißen) mit den Rändern der Öffnungen 11 fluiddicht verbunden sein. Das zweite Filtermedium 3 kann z.B. mit seiner Stirnfläche 8 an die in der Figur untere Seite des Mantels des Deckelelements 6 geklebt sein.

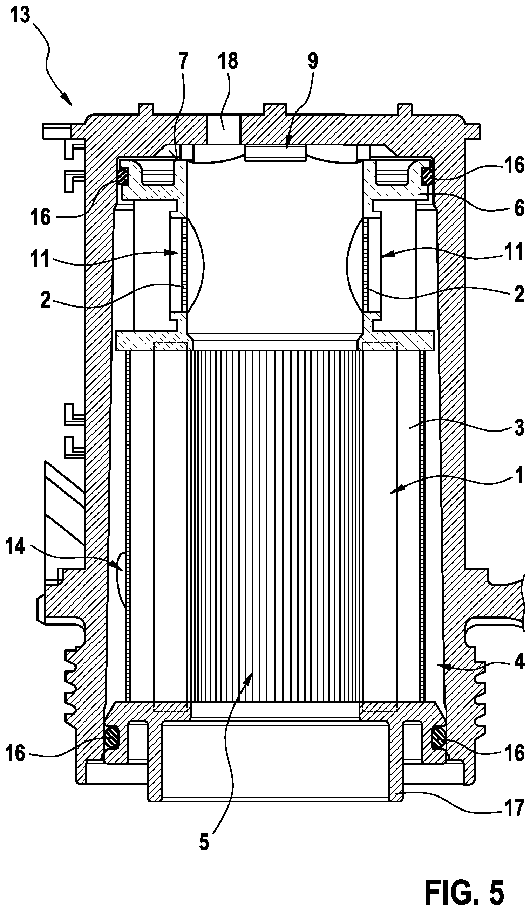

In dem in den Figuren gezeigten Ausführungsbeispiel weist das Filterelement 1 lediglich ein Deckelelement 6 wie beschrieben auf. Ein Abdeckelement 17 ist auf der dem Deckelelement 6 gegenüberliegenden Seite des zweiten Filtermediums 3 angebracht. Das Abdeckelement 17 dient zum Abdichten der gefilterten Seite 5 gegenüber der ungefilterten Seite 4. Bevorzugt weisen sowohl Deckelelement 6 als auch Abdeckelement 17 Dichtungselemente 16 (z.B. O-Ringe) auf, über die das Filterelement 1 in einem Gehäuse 12 (vgl. Figur 5) abdichtbar ist. Durch die Dichtungselemente 16 ist insbesondere die Mantelseite 10 des Deckelelements 6 und die Mantelfläche 15 des zweiten Filtermediums 3 von dem Auslass 9, getrennt bzw. abgedichtet, wenn das Filterelement 1 innerhalb des Gehäuses 12 angeordnet ist. Somit erlaubt das Gehäuse 12 ein Fluid zuverlässig und ohne Leckströme von der ungefilterten Seite 4 durch das Filterelement 1 zu der gefilterten Seite 5 zu leiten.

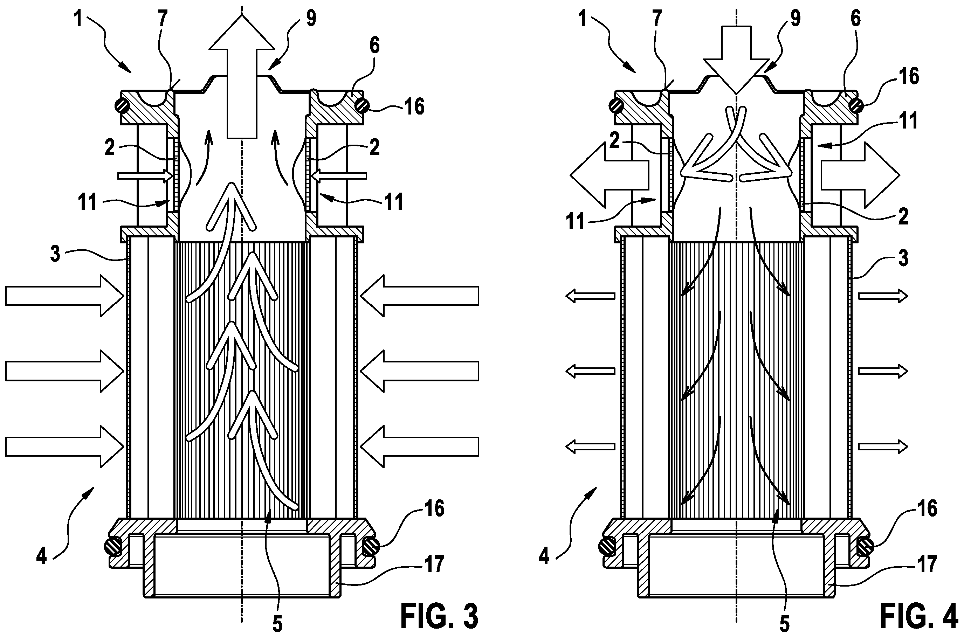

Figur 3 und Figur 4 zeigen das Filterelement 1 während einem Fluidfluss. Dabei ist in Figur 3 ein Normalbetrieb gezeigt, in dem das Filterelement 1 in einer Fluidflussrichtung von der ungefilterten Seite zu der gefilterten Seite durchströmt wird, während in Figur 4 ein Fluidfluss von der gefilterten Seite 5 zu der ungefilterten Seite 4, und somit ein Rückfluss, vorherrscht.

Bevorzugt ist vorgesehen, dass diejenige Fläche des zweiten Filtermediums 3, die gegenüber der ungefilterten Seite 4 exponiert ist, d. h. die Mantelfläche 15, größer ist als diejenige Fläche des ersten Filtermediums 2, die gegenüber der ungefilterten Seite 4 exponiert ist, was der kumulierten Querschnittsfläche der Öffnungen 11 entspricht. Dies kann z.B. dadurch erreicht werden, dass das erste Filtermedium 2 eine plane Oberfläche aufweist, während das zweite Filtermedium 3 in einem zickzack-Muster gefaltet ist. Außerdem ist bevorzugt vorgesehen, dass das zweite Filtermedium 3 in einer Fluidflussrichtung von der ungefilterten Seite 4 zu der gefilterten Seite 5 einen geringeren relativen Druckverlust aufweist als das erste Filtermedium 2. Dies wird insbesondere dadurch erreicht, dass das erste Filtermedium 2 ein Oberflächenfilter ist, während das zweite Filtermedium 3 ein Tiefenfilter ist. Durch die Ausbildung als Oberflächenfilter findet eine schnellere Verstopfung des ersten Filtermediums 2 durch ausgefilterte Partikel statt, als dies bei dem zweiten Filtermedium der Fall ist. Somit durchströmt ein Fluid in einem Normalbetrieb das Filterelement 1 größtenteils durch das zweite Filtermedium 3, während ein Fluss durch das erste Filtermedium 2 nur von untergeordneter Bedeutung ist. In Figur 3 sind dazu unterschiedliche Pfeilstärken realisiert, die die unterschiedliche Verteilung der Durchflussraten symbolisieren.

In einem Normalbetrieb ist somit sichergestellt, dass Fluid, ggf. nach einer kurzen Anlaufzeit von beispielsweise wenigen Sekunden, hauptsächlich von dem zweiten Filtermedium 3 gefiltert wird. Somit erfolgt ein Anlagern von ausgefilterten Partikeln hauptsächlich an dem zweiten Filtermedium 3. Die im zweiten Filtermedium 3 gehaltenen Partikel sind nur schwer wieder lösbar. Dagegen verstopfen die Partikel, als eine Art Filterkuchen, bei Normalbetrieb relativ schnell das erste Filtermedium 2.

In einem Rückflussbetrieb, d. h. während eines Fluidflusses von der gefilterten Seite 5 zu der ungefilterten Seite 4 ist vorgesehen, dass das Fluid hauptsächlich durch das erste Filtermedium 2 strömt. Dazu ist bevorzugt vorgesehen, dass das erste Filtermedium 2 in einer Fluidflussrichtung von der gefilterten Seite 5 zu der ungefilterten Seite 4 einen geringeren relativen Druckverlust aufweist als das zweite Filtermedium 3, zumindest nach einer kurzen Zeitspanne (wenige Sekunden) ab Beginn des Rückflussbetriebs, also in einer stationären Phase des Rückflussbetriebs. Dies wird insbesondere dadurch erreicht, dass aufgrund der Ausbildung des ersten Filtermediums 2 als Oberflächenfilter die anhaftenden Partikel durch den Rückflussbetrieb leicht von dem ersten Filtermedium 2 gelöst werden können, während die an dem zweiten Filtermedium 3 anhaftenden Partikel nur schwer zu abzulösen sind. Da außerdem vorgesehen ist, dass das erste Filtermedium 2 Öffnungen des Deckelelements 6 abdeckt, ist vorteilhafterweise ein kurzer Flussweg von dem Auslass 9 durch das Deckelelement 6 und die Öffnungen 11 zu der ungefilterten Seite 4 vorhanden. Da der Großteil der ausgefilterten Partikel an dem bzw. in dem zweiten Filtermedium 3 anhaftet, findet nur ein geringes Herauslösen von solchen Partikeln aus dem zweiten Filtermedium 3 statt, da im Rückflussbetrieb das Fluid vorwiegend durch das erste Filtermedium 2 und nur zu einem untergeordneten Teil durch das zweite Filtermedium 3 strömt. Denn Partikel im zweiten Filtermedium 3 sind stärker gehalten, als auf dem ersten Filtermedium und der Partialdruck am zweiten Filtermedium in der stationären Phase des Rückflussbetriebs reicht dann nicht mehr aus, eine unerwünscht hohe Anzahl von Partikeln aus dem zweiten Filtermedium herauszulösen. Auf diese Weise ist eine vorhandene Pumpe vor Beschädigung durch herausgelöste Partikel aus dem Filterelement 1 geschützt.

Besonders vorteilhaft kann das Filtermodul 13 ein zusätzliches Ventil aufweisen, mit dem ein Fluidfluss durch das erste Filtermedium 2 in dem in Figur 3 gezeigten Normalbetrieb nicht erfolgt. Somit wird das Ventil vorteilhafterweise dann geschlossen, wenn Normalbetrieb vorliegt. Dies hat zur Folge, dass Fluid ausschließlich durch das zweite Filtermedium 3 strömen kann, wodurch Partikel ausschließlich an dem bzw. in dem zweiten Filtermedium 3 anhaften. In dem in Figur 4 gezeigten Rückflussbetrieb wird daher aus dem ersten Filtermedium 2 kein Partikel herausgelöst, wodurch die Gefahr einer Beschädigung weiterer Komponenten, insbesondere einer Pumpe, weiter vermindert ist. Wie weiter oben beschrieben kann das Ventil ein mechanisches Rückschlagventil sein oder ein elektrisch bzw. elektronisch aktuiertes Ventil (z.B. ein Magnetventil). Dabei kann das Ventil dann z.B. zusammen mit der Abpump-Pumpe gekoppelt sein und bei Einleiten des Rückfluss-Modus geöffnet werden. Das erste Filtermedium 2 kann z.B. in einem abgetrennten und vom Ventil freischaltbaren Raum, der auf der ungefilterten Seite angeordnet ist, angeordnet sein.

In dem beschriebenen Ausführungsbeispiel weist das Filterelement 1 ein Deckelelement 6 mit zwei Öffnungen 11 auf. Alternativ kann das Deckelelement 6 mehrere Öffnungen 11, insbesondere drei, vier, fünf oder sechs oder noch mehr Öffnungen 11 aufweisen. In einer weiteren Alternative kann das Filterelement 1 mehrere, insbesondere zwei, Deckelelemente 6 wie beschrieben aufweisen, z.B. eines wie in der Figur dargestellt oben und eines (nicht dargestellt) unten anstelle des Abdeckelements 17.

Figur 5 zeigt schematisch ein Filtermodul 13 gemäß einem Ausführungsbeispiel der Erfindung. Das Filtermodul 13 umfasst ein Filtergehäuse 12 sowie ein Filterelement 1 wie zuvor beschrieben. Das Filtermodul 13 ist insbesondere Teil eines Harnstoffeinspritzsystems eines Fahrzeugs.

Das Filtermodul 13 weist einen Einlass 14 und einen Gesamtauslass 18 auf. Über den Einlass 14 ist Fluid in das Filtermodul 13 eingebbar. Das Fluid befindet sich somit auf der ungefilterten Seite 4 des Filterelements 1 und wird durch das erste Filtermedium 2 und das zweite Filtermedium 3 gefiltert. Über den Auslass 9 des Filterelements 1 ist Fluid aus dem Filterelement 1 und über den Gesamtauslass 18 aus dem Filtermodul 13 ausgebbar.

Das erfindungsgemäße Filtermodul 13 erlaubt aufgrund des Filterelements 1 vorteilhafterweise einen Rückflussbetrieb, ohne dass dabei ausgefilterte Partikel aus dem Filterelement 1 gelöst werden und zurück zu einer Pumpe gelangen können. Ein Rückflussbetrieb ist immer dann notwendig, wenn das mit Fluid versorgte System von dem Fluid befreit werden soll. Dies ist insbesondere bei der genannten Anwendung der Fall, da dort insbesondere Harnstoffe, die als Betriebsstoffe verwendet werden, aufgrund von Frostgefahr aus dem System entfernt werden müssen. Unter Rückflussbetrieb ist zu verstehen, dass Fluid über den Gesamtauslass 18 des Filtermoduls 13 und den Auslass 9 des Filterelements 1 angesaugt und über den Einlass 14 des Filtermoduls 13 ausgegeben wird.

Das Filtermodul 13 und das Filterelement 1 können jedoch auch als Kraftstofffilter, z.B. für Diesel oder Benzin, eingesetzt werden. Der Begriff Kraftstofffilter kann dabei auch für einen Filter zum Filtern von Harnstofflösung verwendet werden.

## Patentansprüche

1. Filterelement (1), umfassend
- ein erstes Filtermedium (2), und
- ein zweites Filtermedium (3),
wobei das Filterelement (1) eine ungefilterte Seite (4), über die ein Fluid eingebbar ist, und eine gefilterte Seite (5), über die Fluid ausgebbar ist, aufweist,
wobei das erste Filtermedium (2) und das zweite Filtermedium (3) unmittelbar zwischen der ungefilterten Seite (4) und der gefilterten Seite (5) angeordnet sind, und
wobei das erste Filtermedium (2) in einer Fluidflussrichtung von der gefilterten Seite (5) zu der ungefilterten Seite (4) einen geringeren relativen Druckverlust aufweist als das zweite Filtermedium (3),
wobei das erste Filtermedium (2) ein Oberflächenfilter und das zweite Filtermedium (3) ein Tiefenfilter ist.

2. Filterelement nach dem vorhergehenden Anspruch,
wobei das zweite Filtermedium (3) in einer Fluidflussrichtung von der ungefilterten Seite (4) zu der gefilterten Seite (5) einen geringeren relativen Druckverlust aufweist als das erste Filtermedium (2), insbesondere innerhalb einer kurzen Zeitspanne von wenigen Sekunden.

3. Filterelement nach einem der vorhergehenden Ansprüche,
wobei das erste Filtermedium (2) aus einer Membran aus Kunststoff gebildet ist,
wobei der Kunststoff insbesondere Polypropylen (PP), Polybutylenterephthalat (PBT), oder Polyetheretherketon (PEEK) umfasst, und/oder
wobei das zweite Filtermedium (3) aus Zellulose gefertigt ist oder heißgezogene Fasern enthält, die insbesondere nach dem meltblown-Verfahren hergestellt sind.

4. Filterelement nach einem der vorhergehenden Ansprüche,
wobei das erste Filtermedium (2) eine plane Oberfläche aufweist, und/oder
wobei das zweite Filtermedium (3) in einem zick-zack-Muster gefaltet ist.

5. Filterelement (1) nach einem der vorhergehenden Ansprüche, **dadurch gekennzeichnet, dass** das erste Filtermedium (2) und das zweite Filtermedium (3) unterschiedliche Abmessungen aufweisen.

6. Filterelement (1) nach einem der vorhergehenden Ansprüche, **dadurch gekennzeichnet, dass** das zweite Filtermedium (3) hohlzylinderförmig ist und an zumindest einer Stirnfläche (8) ein Deckelelement (6) aufweist, wobei das erste Filtermedium (2) an dem Deckelelement (6) angeordnet ist.

7. Filterelement (1) nach Anspruch 6, **dadurch gekennzeichnet, dass** das Deckelelement (6) hohlzylinderförmig ist und an einer Stirnseite (7) einen Auslass (9) aufweist, um Fluid von der gefilterten Seite (5) auszugeben.

8. Filterelement (1) nach Anspruch 7, **dadurch gekennzeichnet, dass** das Deckelelement (6) an einer Mantelseite (10) zumindest eine Öffnung (11) aufweist, über die die gefilterte Seite (5) mit der ungefilterten Seite (4) verbunden ist, wobei das erste Filtermedium (2) die zumindest eine Öffnung (11) abdeckt.

9. Filterelement (1) nach einem der Ansprüche 6 bis 8, **dadurch gekennzeichnet, dass** das erste Filtermedium (2) und/oder das zweite Filtermedium (3) stoffschlüssig und/oder formschlüssig und/oder reibschlüssig mit dem Deckelelement (6) verbunden sind.

10. Filterelement (1) nach einem der vorgehenden Ansprüche, **dadurch gekennzeichnet, dass** das erste Filtermedium (2) und das zweite Filterelement (3) aus unterschiedlichen Materialien gefertigt sind.

11. Filterelement (1) nach einem der vorhergehenden Ansprüche, **gekennzeichnet durch** ein Ventil zum wahlweise Vermeiden eines Fluidstroms durch das erste Filtermedium (2).

12. Filtermodul (12), umfassend ein Gehäuse (13), wobei in dem Gehäuse (13) ein Filterelement (1) nach einem der vorhergehenden Ansprüche angeordnet ist.

## Claims

1. Filter element (1) comprising
- a first filter medium (2) and
- a second filter medium (3),
wherein the filter element (1) has an unfiltered side (4), via which a fluid can be supplied, and a filtered side (5), via which the fluid can be discharged,
wherein the first filter medium (2) and the second filter medium (3) are arranged directly between the unfiltered side (4) and the filtered side (5), and wherein, in a fluid flow direction from the filtered side (5) to the unfiltered side (4), the first filter medium (2) has a smaller relative pressure loss than the second filter medium (3),
wherein the first filter medium (2) is a surface filter, and the second filter medium (3) is a depth filter.

2. Filter element according to the preceding claim, wherein, in a fluid flow direction from the unfiltered side (4) to the filtered side (5), the second filter medium (3) has a smaller relative pressure loss than the first filter medium (2), in particular within a short period of time of a few seconds.

3. Filter element according to either of the preceding claims,
wherein the first filter medium (2) is formed from a diaphragm composed of plastic,
wherein the plastic comprises in particular polypropylene (PP), polybutylene terephthalate (PBT) or polyether ether ketone (PEEK),
and/or
wherein the second filter medium (3) is made of cellulose or contains hot-drawn fibres which are produced in particular according to the melt-blown method.

4. Filter element according to one of the preceding claims,
wherein the first filter medium (2) has a planar surface,
and/or
wherein the second filter medium (3) is folded in a zigzag pattern.

5. Filter element (1) according to one of the preceding claims, **characterized in that** the first filter medium (2) and the second filter medium (3) have different dimensions.

6. Filter element (1) according to one of the preceding claims, **characterized in that** the second filter medium (3) is hollow-cylindrical and has a cover element (6) on at least one end surface (8), wherein the first filter medium (2) is arranged on the cover element (6).

7. Filter element (1) according to Claim 6, **characterized in that** the cover element (6) is hollow-cylindrical and has an outlet (9) on an end side (7) in order to discharge fluid from the filtered side (5).

8. Filter element (1) according to Claim 7, **characterized in that** the cover element (6) has at least one opening (11) on a shell side (10), via which at least one opening the filtered side (5) is connected to the unfiltered side (4), wherein the first filter medium (2) covers the at least one opening (11).

9. Filter element (1) according to one of Claims 6 to 8, **characterized in that** the first filter medium (2) and/or the second filter medium (3) are/is connected in a materially bonded and/or form-fitting and/or frictionally engaging manner to the cover element (6) .

10. Filter element (1) according to one of the preceding claims, **characterized in that** the first filter medium (2) and the second filter medium (3) are made of different materials.

11. Filter element (1) according to one of the preceding claims, **characterized by** a valve for selective avoidance of a fluid flow through the first filter medium (2).

12. Filter module (12) comprising a housing (13), wherein a filter element (1) according to one of the preceding claims is arranged in the housing (13).

## Revendications

1. Élément filtrant (1), comprenant
- un premier milieu filtrant (2), et
- un deuxième milieu filtrant (3),
l'élément filtrant (1) comportant un côté non filtré (4) par lequel un fluide peut être introduit, et un côté filtré (5) par lequel le fluide peut être délivré en sortie,
le premier milieu filtrant (2) et le deuxième milieu filtrant (3) étant disposés directement entre le côté non filtré (4) et le côté filtré (5), et
le premier milieu filtrant (2) présentant une perte de pression relative plus faible que le deuxième milieu filtrant (3) dans un sens d'écoulement de fluide allant du côté filtré (5) au côté non filtré (4),
le premier milieu filtrant (2) étant un filtre de surface et le deuxième milieu filtrant (3) étant un filtre de profondeur.

2. Élément filtrant selon la revendication précédente,
le deuxième milieu filtrant (3) présentant une perte de pression relative plus faible que le premier milieu filtrant (2), en particulier sur une courte période de quelques secondes, dans un sens d'écoulement de fluide allant du côté non filtré (4) au côté filtré (5).

3. Élément filtrant selon l'une des revendications précédentes,
le premier milieu filtrant (2) étant formé d'une membrane en matière synthétique,
la matière synthétique comprenant en particulier du polypropylène (PP), du téréphtalate de polybutylène (PBT) ou du polyétheréthercétone (PEEK), et/ou le deuxième milieu filtrant (3) étant fabriqué à partir de cellulose ou contenant des fibres étirées à chaud qui sont fabriquées en particulier par le procédé de fusion-soufflage.

4. Élément filtrant selon l'une des revendications précédentes,
le premier milieu filtrant (2) comportant une surface plane, et/ou
le deuxième milieu filtrant (3) étant plié selon un motif en zigzag.

5. Élément filtrant (1) selon l'une des revendications précédentes, **caractérisé en ce que** le premier milieu filtrant (2) et le deuxième milieu filtrant (3) ont des dimensions différentes.

6. Élément filtrant (1) selon l'une des revendications précédentes, **caractérisé en ce que** le deuxième milieu filtrant (3) est en forme de cylindre creux et comporte un élément de recouvrement (6) sur au moins une surface frontale (8), le premier milieu filtrant (2) étant disposé sur l'élément de recouvrement (6).

7. Élément filtrant (1) selon la revendication 6, **caractérisé en ce que** l'élément de recouvrement (6) est en forme de cylindre creux et comporte une sortie (9) sur une face frontale (7) pour délivrer du fluide du côté filtré (5).

8. Élément filtrant (1) selon la revendication 7, **caractérisé en ce que** l'élément de recouvrement (6) comporte sur un côté d'enveloppe (10) au moins une ouverture (11) par laquelle le côté filtré (5) est relié au côté non filtré (4), le premier milieu filtrant (2) recouvrant l'au moins une ouverture (11).

9. Élément filtrant (1) selon l'une des revendications 6 à 8, **caractérisé en ce que** le premier milieu filtrant (2) et/ou le deuxième milieu filtrant (3) sont reliés à l'élément de recouvrement (6) par une liaison de matière et/ou à complémentarité de formes et/ou à friction.

10. Élément filtrant (1) selon l'une des revendications précédentes, **caractérisé en ce que** le premier milieu filtrant (2) et le deuxième milieu filtrant (3) sont réalisés dans des matériaux différents.

11. Élément filtrant (1) selon l'une des revendications précédentes, **caractérisé par** une vanne destinée à éviter sélectivement un écoulement de fluide à travers le premier milieu filtrant (2).

12. Module filtrant (12), comprenant un boîtier (13), un élément filtrant (1) selon l'une des revendications précédentes étant disposé dans le boîtier (13).
